Europäisches Patentamt

European Patent Office

Office européen des brevets

(19)

(11) **EP 0 738 386 B1**

(12) **EUROPÄISCHE PATENTSCHRIFT**

(45) Veröffentlichungstag und Bekanntmachung des Hinweises auf die Patenterteilung:
**20.02.2002 Patentblatt 2002/08**

(21) Anmeldenummer: **95934588.5**

(22) Anmeldetag: **13.10.1995**

(51) Int Cl.⁷: **G01N 27/407**, G01N 27/419

(86) Internationale Anmeldenummer:
**PCT/DE95/01407**

(87) Internationale Veröffentlichungsnummer:
**WO 96/14575 (17.05.1996 Gazette 1996/22)**

(54) **ELEKTROCHEMISCHER MESSFÜHLER ZUR BESTIMMUNG VON STICKOXIDEN IN GASGEMISCHEN**

ELECTROCHEMICAL MEASURING SENSOR FOR DETECTING NITROGEN OXIDES IN GAS MIXTURES

CAPTEUR ELECTROCHIMIQUE POUR DETERMINER LES OXYDES D'AZOTE CONTENUS DANS DES MELANGES GAZEUX

(84) Benannte Vertragsstaaten:
**DE FR GB IT SE**

(30) Priorität: **08.11.1994 DE 4439901**

(43) Veröffentlichungstag der Anmeldung:
**23.10.1996 Patentblatt 1996/43**

(73) Patentinhaber: **ROBERT BOSCH GMBH**
**70442 Stuttgart (DE)**

(72) Erfinder:
• **DIETZ, Hermann**
**D-70839 Gerlingen (DE)**
• **GRÜNWALD, Werner**
**D-70839 Gerlingen (DE)**

(56) Entgegenhaltungen:
**EP-A- 0 257 842**          **DE-C- 3 728 618**
**GB-A- 2 287 543**          **US-A- 4 927 517**
**US-A- 5 034 112**          **US-A- 5 049 254**

**Beschreibung**

Die Erfindung betrifft einen elektrochemischen Meßfühler zur Bestimmung von Stickoxiden in Gasgemischen, insbesondere in Abgasen von Verbrennungskraftmaschinen, nach dem Oberbegriff des Anspruchs 1.

Stand der Technik

Es ist bekannt, daß Abgase von Verbrennungskraftmaschinen, beispielsweise von Dieselmotoren, neben unverbrannten Kraftstoffanteilen und Sauerstoff auch Stickoxide enthalten. Die Zusammensetzung des Abgases wird ganz wesentlich von der Einstellung eines Kraftstoff-Luft-Gemisches bestimmt, mit dem die Verbrennungskraftmaschine betrieben wird. Liegt beispielsweise Kraftstoff im stöchiometrischen Überschuß vor, finden sich erhebliche Mengen an unverbranntem oder nur teilweise verbranntem Kraftstoff im Abgas, während bei einem stöchiometrischen Überschuß des Sauerstoffs der Luft in dem Kraftstoff-Luft-Gemisch eine entsprechend höhere Konzentration des Sauerstoffs in dem Abgas zu verzeichnen ist. Zur Einstellung eines optimalen Kraftstoff-Luft-Gemisches ist es bekannt, die Zusammensetzung des Abgases mit einer Grenzstromsonde (λ-Sonde) zu ermitteln. Die Grenzstromsonde weist hierbei einen zwischen zwei Elektroden angeordneten Festelektrolyten auf, wobei eine Elektrode dem Abgas direkt und eine andere Elektrode dem Abgas über eine Diffusionsbarriere ausgesetzt ist. Bei einer an den Elektroden angelegten konstanten Spannung stellt sich aufgrund eines Sauerstoffkonzentrationsunterschiedes an den beiden Elektroden ein Grenzstrom ein, der mit einer Meßeinrichtung gemessen wird und beispielsweise zum Einstellen des Kraftstoff-Luft-Gemisches, mit dem die Verbrennungskraftmaschine betrieben wird, ausgewertet wird.

Eine derartige Grenzstromsonde ist beispielsweise aus der DE-PS 37 28 618 bekannt. Hierbei ist eine als Pumpelektrode ausgebildete Elektrode in einem Diffusionskanal angeordnet, der einseitig mit dem zu messenden Gasgemisch in Verbindung steht. Innerhalb des Diffusionskanals ist eine Diffusionsbarriere angeordnet, die so beschaffen ist, daß sich an der über die Diffusionsbarriere mit dem Abgas verbundenen Elektrode ein Sauerstoffpartialdruck einstellt, der der angelegten Spannung entspricht.

Weiterhin sind Meßfühler bekannt, bei denen die eine Elektrode dem zu messenden Gasgemisch und die andere Elektrode einem Referenzgas ausgesetzt ist. Aufgrund eines sich einstellenden Sauerstoffkonzentrationsunterschiedes an den Elektroden liegt an diesen eine Spannung an, die über eine Auswerteschaltung ein Maß für die Sauerstoffkonzentration in dem zu messenden Gasgemisch liefert.

Bei den bekannten Meßfühlern ist nachteilig, daß diese lediglich zur Bestimmung eines Sauerstoffgehaltes des zu messenden Gasgemisches eingesetzt werden können, während andere Bestandteile des Gasgemisches unberücksichtigt bleiben.

Vorteile der Erfindung

Der erfindungsgemäße elektrochemische Meßfühler mit den im Anspruch 1 genannten Merkmalen bietet demgegenüber den Vorteil, daß ein selektiver Nachweis auch kleiner Mengen von Stickoxiden neben dem Nachweis einer Sauerstoffkonzentration möglich ist. Dadurch, daß die Kathode aus zwei Teilkathoden besteht, von denen eine erste Teilkathode mit einer für die Stickoxide undurchlässigen Beschichtung versehen ist, ist es vorteilhaft möglich, mittels der ersten Teilkathode den Sauerstoff, für den die Beschichtung durchlässig ist, aus dem Gasgemisch abzupumpen, so daß an einer zweiten Teilkathode lediglich noch die in dem Gasgemisch enthaltenen Stickoxide anliegen. Diese können nunmehr über die zweite Teilkathode von einer Sauerstoffkonzentration unbeeinflußt als Grenzstromsignal quantitativ und selektiv detektiert werden. Der elektrochemische Meßfühler zeichnet sich insgesamt durch einen sehr einfachen und robusten Aufbau aus, der mittels allgemein bekannter Druckschritte, beispielsweise im Siebdruckverfahren, herstellbar ist.

Weitere vorteilhafte Ausgestaltungen der Erfindung ergeben sich aus den übrigen in den Unteransprüchen genannten Merkmalen.

Zeichnung

Die Erfindung wird nachfolgend in einem Ausführungsbeispiel anhand der zugehörigen Zeichnung, die eine schematische Schnittdarstellung durch einen Meßfühler zeigt, näher erläutert.

Beschreibung des Ausführungsbeispiels

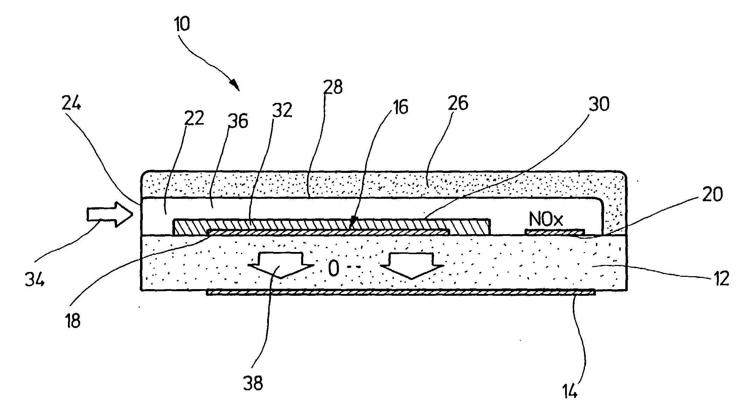

Die Figur zeigt einen allgemein mit 10 bezeichneten Meßfühler. Der Meßfühler 10 besitzt einen im wesentlichen plättchenförmig ausgebildeten Festelektrolyten 12, an dessen einen Seite eine als Anode geschaltete Elektrode 14 angeordnet ist. An der der Anode 14 gegenüberliegenden Seite des Festelektrolyten 12 ist eine als Kathode geschaltete Elektrode 16 angeordnet, die aus einer ersten Teilkathode 18 und einer zweiten Teilkathode 20 besteht. Sowohl die Anode 14 als auch die Teilkathoden 18 und 20 sind über nicht dargestellte Leiterbahnen mit ebenfalls nicht dargestellten Anschlüssen des Meßfühlers 10 verbunden. Die Elektroden sind porös und gasdurchlässig und können beispielsweise aus Platin bestehen. Der Festelektrolyt 12 besteht beispielsweise aus einem mit Ytriumoxid stabilisierten Zirkonoxid. Die Teilkathoden 18 und 20 sind innerhalb eines Diffusionskanals 22 angeordnet. Der Diffusionskanal 22 besitzt an seiner einen Seite eine Öffnung 24 und ist an seiner anderen Seite abgeschlossen.

Der Diffusionskanal 22 bietet somit eine Sackausnehmung. Zur Ausbildung des Diffusionskanals 22 besitzt der Meßfühler 10 eine Abdeckung 26, die als Schicht über dem Festelektrolyten 12 angeordnet ist und eine den Diffusionskanal 22 ergebende Ausnehmung 28 aufweist. Innerhalb des Diffusionskanals 22 ist die erste Teilkathode 18 in der Nähe der Öffnung 24 angeordnet, während die zweite Teilkathode 20 von der Öffnung 24 entfernt angeordnet ist. Die erste Teilkathode 18 ist somit zwischen der Öffnung 24 und der zweiten Teilkathode 20 angeordnet. Die erste Teilkathode 18 besitzt eine Beschichtung 30, die die erste Teilkathode 18 vollkommen in Richtung des Diffusionskanals 22 umschließt. Die Beschichtung 30 ist als eine selektive sauerstoffpermeable Membran 32 ausgebildet.

Der Meßfühler 10 ist einem Gasgemisch, beispielsweise einem Abgas einer Verbrennungskraftmaschine, aussetzbar. Hierzu weist der Meßfühler 10 - in der Figur nicht dargestellt - Haltemittel auf. Das Gasgemisch liegt an der Anode 14 und, hier mit einem Pfeil 34 angedeutet, in dem Diffusionskanal 22 an. Die Abdeckung 26 ist gasdicht ausgeführt, so daß das Gasgemisch 34 nur über die Öffnung 24 in den Diffusionskanal 22 gelangen kann. Das Gasgemisch 34 enthält typischerweise Sauerstoff $O_2$ und Stickoxide $NO_x$. Innerhalb des Diffusionskanals 22 ist eine Diffusionsbarriere 36 angeordnet, die vorzugsweise aus einem porösen Mischleiter besteht. Die Diffusionsbarriere 36 verhindert, daß sich bei einer Änderung der Zusammensetzung des Gasgemisches diese nicht gleichzeitig an der Anode 14 und den Teilkathoden 18 beziehungsweise 20 anliegt. Da die Teilkathode 18 vor der Teilkathode 20 innerhalb des Diffusionskanals 22 angeordnet ist, gelangt das Gasgemisch 34 nur zu der Teilkathode 20, wenn dieses zuvor die Teilkathode 18 passiert hat. Die Beschichtung 30 ist hierbei ausschließlich für den Sauerstoff $O_2$ gasdurchlässig, so daß die weiterhin in dem Gasgemisch 34 enthaltenen Stickoxide $NO_x$ die Teilkathode 18 nicht erreichen können.

Bei dem in der Figur dargestellten Meßfühler 10 wurde aus Gründen der Übersichtlichkeit auf die Darstellung einer Heizeinrichtung, über die derartige Meßfühler in der Regel verfügen, verzichtet. Die Heizeinrichtung dient dazu, den Meßfühler 10 auf eine notwendige Betriebstemperatur von mehreren 100 °C zu erwärmen.

Der in der Figur gezeigte Meßfühler 10 übt folgende Funktion aus:

Beim Betrieb des Meßfühlers 10 ist zwischen der ersten Teilkathode 18 und der Anode 14 eine Pumpspannung angelegt. Zwischen der Teilkathode 20 und der Anode 14 liegt eine weitere, schaltungstechnisch von der Pumpspannung getrennte Spannung an. Das Gasgemisch 34 diffundiert durch den Diffusionskanal 22 an der Beschichtung 30 der ersten Teilkathode 18 vorbei. Da die Beschichtung 30 ausschließlich für den Sauerstoff $O_2$ des Gasgemisches 34 gasdurchlässig ist, diffundiert der Sauerstoff $O_2$ zur Teilkathode 18. Aufgrund der zwischen der Teilkathode 18 und der Anode 14 angelegten Pumpspannung wird der Sauerstoff $O_2$ aus dem Gasgemisch 34 innerhalb des Diffusionskanals 22 abgepumpt. Hierbei läuft folgende Umsetzungsreaktion ab:

$$2\,e + 1/2\,O_2 \longrightarrow O^{--}.$$

Der Sauerstoff $O_2$ wird also, wie in der Figur mit den Pfeilen 38 angedeutet ist, als Sauerstoffionen $O^{--}$ von der Teilkathode 18 zur Anode 14 durch den Festelektrolyten 12 gepumpt, so daß ein Pumpstrom über den Festelektrolyten 12 fließt. Der Pumpstrom kann mittels eines nicht dargestellten Meßinstrumentes, beispielsweise eines Amperemeters, gemessen werden und bildet einen Anhaltspunkt für eine in dem Gasgemisch 34 vorhandene Sauerstoffkonzentration.

Das in dem Diffusionskanal 22 vorhandene Gasgemisch 34 diffundiert nunmehr an der Teilkathode 18 vorbei zur Teilkathode 20. Aufgrund der erläuterten Abpumpung des Sauerstoffs $O_2$ aus dem Gasgemisch 34 liegt an der Teilkathode 20 ein im wesentlichen von dem Sauerstoff $O_2$ befreites Gasgemisch 34 an. Dieses enthält somit im wesentlichen nur noch die Stickoxide $NO_x$. Durch die an der Teilkathode 20 und der Anode 14 angelegte Spannung entsteht hier ein Grenzstromsignal, das ausschließlich von der Stickoxidkonzentration in dem Gasgemisch 34 abhängig ist. Dieses Grenzstromsignal kann über eine Meßeinrichtung, beispielsweise ein Amperemeter, ausgewertet werden.

Es wird also klar, daß der Meßfühler 10 geeignet ist, unabhängig voneinander einerseits eine Sauerstoffkonzentration und andererseits eine Stickoxidkonzentration in einem Gasgemisch 34 zu detektieren. Dadurch, daß der Sauerstoff vor Erreichen des Gasgemisches 34 der Teilkathode 20 aus dem Gasgemisch 34 abgepumpt wird, sind die Stickoxide $NO_x$ quantitativ auch in kleinen Mengen in dem Gasgemisch 34 nachweisbar.

Die Wirkungsweise des Meßfühlers 10 kann dadurch verbessert beziehungsweise den zu erwartenden Gasgemischen 34 angepaßt werden, indem die Größe der ersten Teilkathode 18 und der diese umschließende Beschichtung 30 variiert werden. Je größer eine innere Oberfläche der Beschichtung 30 beziehungsweise der Teilkathode 18 ist, wird eine Pumpleistung der von der Teilkathode 18 und der Anode 14 gebildeten sauerstoffselektiven Pumpzelle verbessert. Somit kann auch bei hohen Sauerstoffanteilen in dem Gasgemisch 34, beispielsweise wenn ein Kraftstoff-Luft-Gemisch, mit dem die Verbrennungskraftmaschine betrieben wird, im mageren Bereich liegt, der Sauerstoff aus dem Gasgemisch zuverlässig abgepumpt werden, so daß ein Grenzstromsignal für den Stickoxidanteil im Gasgemisch 34 - auch bei kleinen Anteilen gegenüber dem Sauerstoff - erzielbar ist. Bevorzugt ist hier ein Ausführungsbeispiel, bei dem die Diffusionsbarriere 36 aus dem gleichen Material wie die Beschichtung 30 besteht. Die Diffusionsbarriere 36 ist hierbei mit Porenbildnern versehen, so daß sie eine poröse Struktur bietet und für die Stickoxide des Gasgemisches durchlässig wird, so daß diese bis zur Teilkathode 20 diffundieren können.

Der Meßfühler 10 ist insgesamt mit wenigen, an sich bekannten und beherrschbaren Druckschritten, beispielsweise im Siebdruck, herstellbar.

## Patentansprüche

1. Elektrochemischer Meßfühler zur selektiven Bestimmung von Stickoxiden in Gasgemischen, insbesondere in Abgasen von Verbrennungskraftmaschinen, mit einer Grenzstromsonde, wobei eine dem Gasgemisch ausgesetzte Kathode der Grenzstromsonde in einem Diffusionskanal angeordnet ist, **dadurch gekennzeichnet, daß** die Kathode (16) aus wenigstens zwei Teilkathoden (18, 20) besteht, von denen eine erste Teilkathode (18) mit einer für Stickoxide ($NO_x$) undurchlässigen und ausschließlich für Sauerstoff ($O_2$) durchlässigen Beschichtung (30) versehen ist.

2. Meßfühler nach Anspruch 1, **dadurch gekennzeichnet, daß** die erste Teilkathode (18) innerhalb des Diffusionskanals (22) zwischen einer Öffnung (24) des Diffusionskanals (22) und einer zweiten Teilkathode (20) angeordnet ist.

3. Meßfühler nach einem der vorhergehenden Ansprüche, **dadurch gekennzeichnet, daß** die erste Teilkathode (18) mit einer Anode (14) eine Sauerstoff-Pumpzelle bildet.

4. Meßfühler nach einem der vorhergehenden Ansprüche, **dadurch gekennzeichnet, daß** die Beschichtung (30) eine Sauerstoff-Diffusionsbarriere ist, die von einer selektiven sauerstoffpermeablen Membran (32) gebildet wird.

5. Meßfühler nach einem der vorhergehenden Ansprüche, **dadurch gekennzeichnet, daß** über eine Größe der Beschichtung (30) eine Pumpleistung der Sauerstoff-Pumpzelle einstellbar ist.

6. Meßfühler nach einem der vorhergehenden Ansprüche, **dadurch gekennzeichnet, daß** in dem Diffusionskanal (22) eine Diffusionsbarriere (36) für das Gasgemisch (34) angeordnet ist.

7. Meßfühler nach einem der vorhergehenden Ansprüche, **dadurch gekennzeichnet, daß** eine in dem Diffusionskanal (22) angeordnete Diffusionsbarriere (36) aus dem gleichen Material besteht wie die Beschichtung (30).

8. Meßfühler nach Anspruch 7, **dadurch gekennzeichnet, daß** die Diffusionsbarriere (36) eine poröse, für Stickoxide durchlässige Struktur besitzt.

## Claims

1. Electrochemical sensor for the selective detection of nitrogen oxides in gas mixtures, in particular in exhaust gases from internal-combustion engines, having a limit current sensor, a cathode of the limit current sensor which is exposed to the gas mixture being arranged in a diffusion duct, **characterized in that** the cathode (16) comprises at least two partial cathodes (18, 20), of which a first partial cathode (18) is provided with a coating (30) which is impermeable to nitrogen oxides ($NO_x$) and is only permeable to oxygen ($O_2$).

2. Sensor according to Claim 1, **characterized in that** the first partial cathode (18) is arranged inside the diffusion duct (22), between an opening (24) of the diffusion duct (22) and a second partial cathode (20).

3. Sensor according to one of the preceding claims, **characterized in that** the first partial cathode (18) together with an anode (14) forms an oxygen pumping cell.

4. Sensor according to one of the preceding claims, **characterized in that** the coating (30) is an oxygen diffusion barrier which is formed by a selective oxygen-permeable membrane (32).

5. Sensor according to one of the preceding claims, **characterized in that** a pumping capacity of the oxygen pumping cell can be adjusted by means of size of the coating (30).

6. Sensor according to one of the preceding claims, **characterized in that** a diffusion barrier (36) for the gas mixture (34) is arranged in the diffusion duct (22).

7. Sensor according to one of the preceding claims, **characterized in that** a diffusion barrier (36) arranged in the diffusion duct (22) consists of the same material as the coating (30).

8. Sensor according to Claim 7, **characterized in that** the diffusion barrier (36) has a porous structure which is permeable to nitrogen oxides.

## Revendications

1. Capteur électrochimique pour la détermination sélective des oxydes d'azote contenus dans des mélanges gazeux notamment dans les gaz d'échappement de moteurs à combustion interne, comprenant une sonde à courant limite dont la cathode est exposée au mélange gazeux dans un canal de diffusion,

**caractérisé en ce que**

la cathode (16) se compose d'au moins deux cathodes partielles (18, 20), dont une première cathode partielle (18) est munie d'un revêtement (30) imperméable aux oxydes d'azote ($NO_x$) et exclusivement perméable à l'oxygène ($O_2$).

2.  Capteur selon la revendication 1,
    **caractérisé en ce que**
    la première cathode partielle (18) est placée dans le canal de diffusion (22) entre une ouverture (24) du canal (22) et une seconde cathode partielle (20).

3.  Capteur selon l'une quelconque des revendications précédentes,
    **caractérisé en ce que**
    la première cathode partielle (18) forme une cellule de pompage d'oxygène avec une anode (14).

4.  Capteur selon l'une quelconque des revendications précédentes,
    **caractérisé en ce que**
    le revêtement (30) est une barrière de diffusion d'oxygène formée par une membrane (32) perméable de manière sélective à l'oxygène.

5.  Capteur selon l'une quelconque des revendications précédentes,
    **caractérisé en ce que**
    la puissance de pompage de la cellule de pompage d'oxygène se règle par les dimensions du revêtement (30).

6.  Capteur selon l'une quelconque des revendications précédentes,
    **caractérisé par**
    une barrière de diffusion (36) pour le mélange gazeux (34) prévue dans le canal de diffusion (22).

7.  Capteur selon l'une quelconque des revendications précédentes,
    **caractérisé par**
    par une barrière de diffusion (36) prévue dans le canal de diffusion (22), cette barrière étant réalisée dans la même matière que le revêtement (30).

8.  Capteur selon la revendication 7,
    **caractérisé en ce que**
    la barrière de diffusion (36) possède une structure poreuse perméable aux oxydes d'azote.

EP 0 738 386 B1